# EUROPEAN PATENT APPLICATION

(11) **EP 0 655 844 A2**
(43) Date of publication of application: **31.05.1995**
(21) Application number: 94308522.5
(22) Date of filing: 18.11.1994
(51) Int. Cl.: H04B 1/40, H04B 1/26, H03D 7/16

(54) **Method and apparatus for forming intermediate frequency signals**

(30) Priority: 26.11.1993 FI 935271
(71) Applicant: NOKIA MOBILE PHONES LTD., SF-24101 Salo (FI)
(72) Inventor: Huusko, Risto, SF-24240 Salo (FI); Liukkonen, Jorma, SF-24280 Salo (FI); Sointula, Erkka, SF-25250 Marynummi (FI)
(74) Representative: Frain, Timothy John

(57) **Abstract**

The object of the invention is a method and a circuit arrangement for forming intermediate frequency signals in the radio frequency part of digital mobile phones or corresponding radio telephone units, the method using several local signals (LO2, LO3) for forming the intermediate frequency signals (IF2, IF3), whose frequency is lower than the radio frequency. According to the invention, one of the intermediate frequency signals (IF3) is formed by dividing the local signal (LO2) used for forming the intermediate frequency signal (IF2), whose frequency is higher than the intermediate frequency signal (IF3), by a suitable integer (N=2, 3, 4,...) for forming a new local signal (LO3), whose frequency is decreased to a corresponding degree, and by mixing this local signal (LO3) with the preceding intermediate frequency signal (IF2) of higher frequency.

## Description

The present invention relates to forming intermediate frequency signals, in particular for radio telephones.

It is previously known that all local signals needed in the radio frequency part of a mobile phone are synthesised using separate frequency synthesisers. Consequently, if the radio frequency part of the mobile phone uses three local signals, they are formed separately using three synthesisers or some other stable frequency source such as a crystal oscillator or the like. Using three frequency sources is particularly problematic when the radio frequencies are high, in the frequency range of 1.5 ... 2.0 GHz, for instance. Radio telephone systems using such frequencies include JDC 1500 (1500 MHz) and DCS1800 (1800 MHz). Voltage controlled oscillators and phase-locked loops are generally used in frequency synthesisers, being expensive

In a first aspect the present invention provides a method for forming intermediate frequency signals for a radio telephone, comprising dividing a first local oscillator signal used to form a first intermediate frequency signal, by an integer thereby forming a new local signal having a frequency lower than the first local oscillator signal, and in a second aspect of the present invention provides apparatus for forming intermediate frequency signals for a radio telephone, comprising a first frequency synthesisers for forming a first local oscillator signal and a second frequency synthesiser coupled to an output of the first frequency synthesiser to receive the first local oscillator signal, the second frequency synthesiser including dividing means to divide the frequency of the first local oscillator signal input thereto, thereby providing a second local oscillator signal.

These have the advantage that a reduced number of oscillators need be implemented to provide the required number of local oscillator signals. Furthermore, because there are fewer oscillators, there is less space required and also less power used than for conventional systems.

An advantage of the method in accordance with the invention for forming intermediate frequency signals and of the applied circuit arrangement is that the frequency synthesis is facilitated in the radio frequency part of mobile phones and other similar devices as compared to the previously known one. Another advantage of the invention is, in particular, that the number of phase locked loops generally used in frequency synthesizers can be reduced.

In a particular embodiment in accordance with the invention, the second local oscillator signal is input to a phase locked loop of the first frequency synthesiser. This is advantageous since the first frequency synthesisers phase comparisons takes place at a relatively low frequency, which increases accuracy. Additionally, less power is consumed than if the VCO output went directly to the phase locked loop input of the first frequency synthesiser.

The invention is described in more detail in the following with reference to the appended illustration which shows a block diagram of the radio frequency part of a mobile phone.

The radio frequency part of the mobile phone includes, in the receiver part, RF input circuit 19, three mixing units 7, 4, 5 and three frequency synthesisers 6, 1, 2. The transmitting part of the radio frequency part includes I/Q modulator 22 and mixing unit 23. One of the frequency synthesisers is a UHF frequency synthesiser 6 and the other two are VHF frequency synthesisers 1, 2.

The first VHF frequency synthesiser 1 includes voltage controlled oscillator 8, amplifier 9 and phase-locked loop 10. The second VHF frequency synthesiser 2 includes frequency divider 3 and amplifier 11. Output 1b of the first VHF frequency synthesiser, from which the second local signal LO2 is obtained, is connected to the second VHF frequency synthesiser 2 and to input 2a of frequency divider 3 included in it. Frequency divider 3 is used to divide the frequency of local signal LO2 fed to frequency synthesiser 2 using integer N=2, 3, 4, ... for forming the third local signal LO3 of a lower frequency. This local signal LO3 of a lower frequency can be transmitted amplified from output 2b of amplifier 11 of the second VHF frequency synthesiser 2. Output signal LO3 of second VHF frequency synthesiser 2 is connected to input 1a of first frequency synthesiser 1, i.e., to phase-locked loop 10.

UHF frequency synthesiser 6 consists of voltage controlled oscillator 15, amplifier 16, divider 17 and phase-locked loop 18. Local signal LO1 of the highest frequency, i.e., the first local signal, is obtained from this UHF frequency synthesiser.

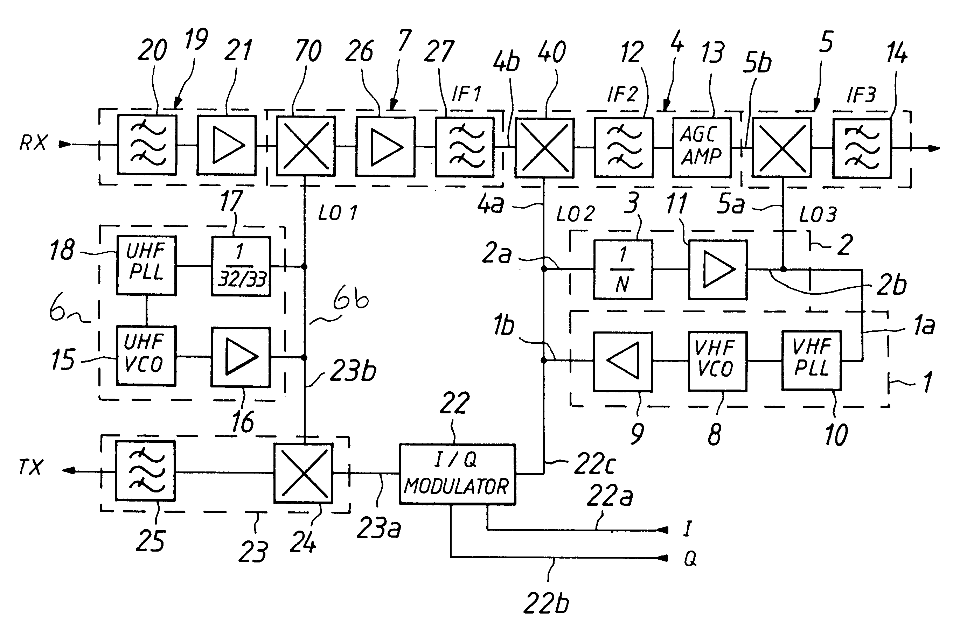

The radio frequency part of the mobile phone illustrated in the figure operates in the following way: Radio frequency signal RX is received by the antenna (not shown in the figures) of the mobile phone and it is fed to first mixing unit 7 via bandpass filter 20 and amplifier 21 of RF input circuit 19. Radio frequency signal RX is filtered in bandpass filter 20 and amplified by low-noise amplifier 21. The radio frequency RX signal is then fed into mixing unit 7 together with local signal LO1 of UHF frequency synthesiser 6. In mixing unit 7 the frequencies of the signals are first mixed down in mixer 70, the signals are amplified in amplifier 26 and filtered in bandpass filter 27, resulting in first intermediate frequency signal IF1.

Output 1b of VHF frequency synthesiser 1, from which second local signal LO2 is obtained, is connected to input 4a of second mixing unit 4. First mixing unit 7 and first intermediate frequency signal IF1 obtained from there are, in turn, connected to second input 4b of mixing unit 4. In second mixing unit 4, first intermediate frequency signal IF1 and second local signal LO2 are mixed down on their frequencies in mixer 4, filtered in bandpass filter 12 and amplified in amplifier 13 whose amplification is adjustable, resulting in second intermediate frequency signal IF2.

Output 1b of VHF frequency synthesiser 1 is connected, in addition to input 4a of mixing unit 4, also to input 2a of second VHF frequency synthesiser 2. Output 2b of second VHF frequency synthesiser 2 is, in turn, connected to input 5a of third mixing unit 5. Second frequency synthesiser 2 divides the frequency of the local signal fed into it by a suitable integer to form third local signal LO3 of a lower frequency. This local signal LO3 is then fed into first input 5a of third mixing unit 5. Second intermediate frequency signal IF2 obtained from second mixing unit 4 is fed into second input 5b of third mixing unit 5. In mixing unit 5, second intermediate frequency signal IF2 and third local signal LO3 fed into it are mixed down on their frequencies in mixer 5 and filtered further in bandpass filter 14 into third intermediate frequency signal IF3.

Output 1b of VHF frequency synthesiser 1 is connected to input 22c of I/Q modulator 22 in the transmitting side of the radio frequency part of the mobile phone. I/Q signals I and Q are respectively connected to signal inputs 22a, 22b of I/Q modulator 22. Consequently, output signal LO2 of VHF frequency synthesiser 1 is used as a local signal in I/Q modulator 22, from which it is fed in a modulated form using transmission signals further into mixing unit 23 and its input 23a. Output signal LO2 of the VHF frequency synthesiser modulated in mixer 24 of mixing unit 23 is mixed upwards into a high frequency radio frequency signal using first local signal LO1. The output of first frequency synthesiser 6 is namely also connected to input 23b of mixer 24 in mixing unit 23 in the transmission part. The output of mixer 24 of mixing unit 23 is connected via bandpass filter 25 as a radio frequency transmission signal further into a TX power amplifier (not shown in the figure) and forwarded to the radio path via the antenna.

The following example is given to clarify the circuit arrangement in accordance with the invention. If the first of the above-mentioned intermediate frequencies IF1 is 487 MHz and the frequency of the voltage controlled oscillator of VHF frequency synthesiser 1 is 400 MHz, then second intermediate frequency IF2 is 87 MHz (= 487 MHz - 400 MHz). Once the signal frequency of local signal LO2 of VHF frequency synthesiser 1 is divided by integer 4 using frequency divider 3 of VHF frequency synthesiser 2, 100 MHz is obtained as the third local frequency LO3. Thus the frequency of third intermediate frequency signal IF3 is 13 MHz (= 100 MHz - 87 MHz). This third intermediate frequency IF3 is the output signal of the radio frequency part in the receiving direction and it is fed into the A/D converter subsequent to the radio frequency part. The frequency range of the UHF frequency synthesiser, i.e., that of the first frequency synthesiser 6, is in this example between 1318 - 1393 MHz (1805 MHz - 487 MHz ... 1880 MHz - 487 MHz).

In the transmitting part the frequency of the output signal of I/Q modulator 22 corresponds to the second frequency of local signal LO2, i.e., it is 400 MHz. This signal is mixed by mixer 24 of mixing unit 23 into a higher frequency using the output of UHF frequency synthesiser 6. In the transmission operation the frequency range of UHF frequency synthesiser 6 is between 1310 - 1385 MHz (1710 MHz - 400 MHz ... 1785 MHz - 400 MHz). Consequently, UHF frequency synthesiser 6 hops 8 MHz when transferring from the receiving operation to the transmission operation.

In the above example local signal LO2 of VHF frequency synthesiser 1 was divided in second frequency synthesiser 2 by integer 4 to form third local signal LO3. The integer or the dividing factor can be any integer, for instance 2, 4, 8, depending on the implementation of the radio frequency part.

In view of the foregoing description it will be evident to a person skilled in the art that various modifications may be made within the scope of the invention.

The scope of the present disclosure includes any novel feature or combination of features disclosed therein either explicitly or implicitly or any generalisation thereof irrespective of whether or not it relates to the claimed invention or mitigates any or all of the problems addressed by the present invention. The applicant hereby gives notice that new claims may be formulated to such features during prosecution of this application or of any further application derived therefrom.

## Claims

1. A method for forming intermediate frequency signals for a radio telephone, comprising dividing a first local oscillator signal (LO2) used to form a first intermediate frequency signal (IF2) by an integer (N = 2, 3, 4,...) thereby forming a new local signal (LO3), having a frequency lower than the first local oscillator signal (LO2).

2. A method according to claim 1, wherein the second local oscillator signal (LO3) is mixed with the first intermediate frequency signal (IF2) to form a second intermediate frequency signal (IF3).

3. A method according to Claim 1 or claim 2, further comprising mixing a third local signal (LO1) with a radio frequency signal (RX) to form a third intermediate frequency signal (IF1), and mixing the third intermediate frequency signal (IF1) with the first local oscillator signal (LO2).

4. Apparatus for forming intermediate frequency signals for a radio telephone, comprising a first frequency synthesiser (1) for forming a first local oscillator signal (LO2), and a second frequency synthesiser (2) coupled to an output of the first frequency synthesiser (1) to receive the first local oscillator signal (LO2), the second frequency synthesiser (2) including dividing means (3) to divide the frequency of the first local oscillator signal (LO2) input thereto, thereby providing a second local oscillator signal (LO3).

5. Apparatus according to claim 4, wherein the output (1b) of the first frequency synthesiser (1) is connected to the input (4a) of the second mixing unit (4) to produce the second intermediate frequency signal (IF2) from a high-frequency signal (IF1) fed to the first mixing unit (4) and an output (2b) of the second frequency synthesiser (2), from which the second local oscillator signal (LO3) is obtained, is connected to a first input (5a) of a second mixing unit (5), the first intermediate frequency signal (IF2) being connected to a second input (5b) of the second mixing unit (5) to form a third intermediate frequency signal (IF3).

6. Apparatus according to claim 4 or claim 5, wherein the first and second frequency synthesisers (1, 2) are VHF synthesisers.

7. A circuit arrangement according to Claim 6, wherein the first VHF frequency synthesiser (1) comprises a voltage-controlled oscillator (8), an amplifier (9) and a phase-locked loop (10), the second VHF frequency synthesiser (2) comprises a frequency divider (3) and an amplifier (11), and the output (1b) of the first VHF frequency synthesiser (1) is coupled to an input (2a) of the second VHF frequency synthesiser (2) and the output (2b) of the second VHF frequency synthesiser (2) is also coupled to an input (1a) of the phase-locked loop (10) of the first VHF frequency synthesiser (1).

8. Apparatus according to any of claims 4 to 7, further comprising a third local oscillator signal (LO1) with a received radio frequency signal (RX) to form a third intermediate frequency signal (FI1), and mixing the third intermediate frequency signal (IF1) with the first local oscillator signal (LO2).

9. Apparatus according to any of claims 4 to 9, wherein the third intermediate frequency signal (IF1) is coupled to a second input (4b) of the first mixing unit (4), the first intermediate frequency signal (IF2) being obtained from an output (4c) of the mixing unit (4), the first intermediate frequency signal being connected to the second input (5b) of the third mixing unit (5) via a bandpass filter (12) and an amplifier (13) whose amplification is adjustable.

10. Apparatus according to any of Claims 6 to 9, wherein the output (1b) of the VHF frequency synthesiser (1) is also coupled to a local oscillator input (22c) of an I/Q modulator (22).

11. Apparatus according to any of Claims 4 to 9, wherein an output (6b) of the third (UHF) frequency synthesiser (6) as well as the third local signal (LO1) are both coupled to an input (23b) of a mixing unit (23) adjacent an I/Q modulator (22) of a transmission part and to an input of the first mixing unit (4) of a receiving part.
